# EUROPEAN PATENT APPLICATION

(11) **EP 4 733 149 A1**
(43) Date of publication of application: **29.04.2026**
(21) Application number: 25209912.2
(22) Date of filing: 20.10.2025
(51) Int. Cl.: B60R 19/48, G01S 7/02, G01S 13/931

(54) **VEHICLE STRUCTURE**

(30) Priority: 25.10.2024 JP 2024187981
(71) Applicant: Suzuki Motor Corporation, Shizuoka 432-8611 (JP)
(72) Inventor: KAWAHARA, Shunya, Hamamatsu-shi, 432-8611 (JP); ARIMITSU, Kaishi, Hamamatsu-shi, 432-8611 (JP)
(74) Representative: Haseltine Lake Kempner LLP

(57) **Abstract**

[Problem to be Solved] Displacement of a sensor device disposed on a back surface side of an exterior panel is reduced even when the sensor device is supported at a position distant from a vehicle body structural member.

[Solution] A vehicle structure includes an exterior panel 10 that constitutes a design surface on a vehicle outer side, and a sensor supporting member that is disposed on a vehicle-inner side of the exterior panel 10 and supports a sensor device S configured to sense an environment outside the vehicle, and the sensor supporting member is fixed to a vehicle body structural member. The sensor supporting member includes a protrusion portion 24 that protrudes toward the exterior panel 10 in a vehicle in-out direction and supports the sensor device S, and the exterior panel 10 includes an adjoining portion 15 that is disposed adjacent to an outer peripheral surface of the protrusion portion 24.

## Description

### [Technical Field]

The present invention relates to vehicle structures including structures for disposing a sensor device at a front or rear portion of a vehicle.

### [Background Art]

A sensor device configured to sense an environment outside a vehicle may be provided at a front or rear portion of a vehicle such as an automobile. Examples of the sensor device include a millimeter wave radar that uses electromagnetic waves in a millimeter wave band as detection waves, a sound wave sensor (ultrasonic wave sensor/sonar) that uses sound waves as detection waves, and a camera (image capturing device). The sensor device is disposed on the back surface of an exterior panel, such as a bumper or a grille, that constitutes a design surface on the vehicle outer side.

A structure disclosed in Patent Literature 1 is known as an example of a conventional vehicle structure including a structure for attaching the sensor device at the back surface side of the exterior panel. The structure disclosed in Patent Literature 1 includes a first absorption mechanism configured to hold, in a retractable manner in a front-rear direction, a sensor bracket for holding a sensor, and a second absorption mechanism configured to hold the sensor bracket in a swingable manner. The sensor bracket is suspended from an upper beam, which is a vehicle body structural member, through the first absorption mechanism and the second absorption mechanism, and is fixed on the back side of an emblem as the exterior panel.

### [Citation List]

### [Patent Literature]

[Patent Literature 1] JP 2021-148607 A

### [Summary of Invention]

### [Problem to be Solved by the Invention]

A sensor device should be maintained at an intended position relative to the vehicle body structural member in order to maintain desired sensing accuracy. In Patent Literature 1, the sensor device is supported by the vehicle body structural member through the first absorption mechanism, the second absorption mechanism, and the sensor bracket. In this manner, when the sensor device is supported by the vehicle body structural member by a sensor supporting member at a position separated from the vehicle body structural member, a part of the sensor supporting member between the sensor device and the vehicle body structural member must be longer as the sensor device is positioned farther away from the vehicle body structural member, and the sensor device tends to be more susceptible to displacement due to vibrations or the like. Thus, even when the sensor bracket is fixed to the exterior panel, the sensor device potentially deviates from an intended position due to vibrations during driving or minor collisions. Accordingly, the structure of Patent Literature 1 has room for improvement in terms of reducing displacement of the sensor device.

Thus, it is an object of the present invention to provide a vehicle structure that can reduce displacement of a sensor device even when the sensor device is supported at a position separated from a vehicle body structural member.

### [Means for Solving the Problem]

An aspect of the present invention is a vehicle structure including an exterior panel that constitutes a design surface on a vehicle outer side, and a sensor supporting member that is disposed on a vehicle-inner side of the exterior panel and supports a sensor device configured to sense an environment outside the vehicle, the sensor supporting member being fixed to a vehicle body structural member. In the vehicle structure, the sensor supporting member includes a protrusion portion that protrudes toward the exterior panel in a vehicle in-out direction and supports the sensor device, and the exterior panel includes an adjoining portion that is disposed adjacent to an outer peripheral surface of the protrusion portion.

### [Advantageous Effect of Invention]

According to an aspect of the present invention, displacement of a sensor device disposed on a back surface side of an exterior panel can be reduced even when the sensor device is supported at a position separated from a vehicle body structural member.

### [Brief Description of Drawings]

[Figure 1] Figure 1 is a perspective view of a front portion of a vehicle to which a vehicle structure according to an embodiment of the present invention is applied.
[Figure 2] Figure 2 is a perspective view of the front portion of the vehicle in a state in which a second exterior panel is removed.
[Figure 3] Figure 3 is an exploded perspective view of a sensor supporting member and a vehicle body structural member.
[Figure 4] Figure 4 is a perspective view of the front portion of the vehicle when viewed from a vehicle rear side.
[Figure 5] Figure 5 is a plan view of the vehicle structure when viewed from the vehicle rear side.
[Figure 6] Figure 6 is a perspective view of a sensor surrounding region including a frame portion.
[Figure 7] Figure 7 is a perspective view of an adjoining portion attached on the outer side of the frame portion.
[Figure 8] Figure 8 is a partial cross-sectional view along line A-A in Figure 5.
[Figure 9] Figure 9 is an enlarged view of region B in Figure 5.
[Figure 10] Figure 10 is a partially perspective view of the sensor surrounding region when viewed from the vehicle rear side.
[Figure 11] Figure 11 is a plan view of a first exterior panel and the second exterior panel when viewed from the vehicle rear side in a state in which the sensor supporting member is removed.
[Figure 12] Figure 12 is a perspective view of a front portion of a vehicle to which a modification of a vehicle structure according to a reference example is applied.
[Figure 13] Figure 13 is a perspective view of the front portion of the vehicle in Figure 12 from which an exterior panel is removed.
[Figure 14] Figure 14 is a plan view of the vehicle structure according to the modification when viewed from the vehicle rear side.

### [Description of Embodiment]

Exemplary embodiments of the present invention will be described below with reference to the accompanying drawings. In the drawings, the direction of arrow Fr indicates a vehicle front side in a vehicle front-rear direction, and the direction of arrow Rr indicates a vehicle rear side in the vehicle front-rear direction. The direction of arrow L indicates a left side of the vehicle in a vehicle width direction in a state in which the vehicle is viewed from the rear side toward the front side. The direction of arrow U indicates a vehicle upper side in a vehicle up-down direction. In description below, "front" and "rear" correspond to front and rear, respectively, in the vehicle front-rear direction, and "up" and "down" correspond to up and down, respectively, in the vehicle up-down direction. In addition, "left" and "right" correspond to left and right, respectively, in the vehicle width direction in a state of being viewed from the vehicle rear side toward the vehicle front side.

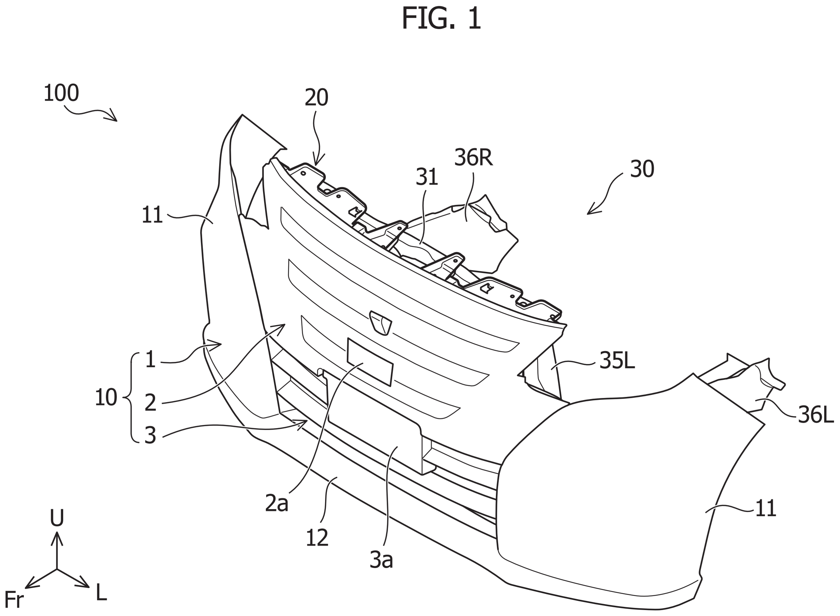

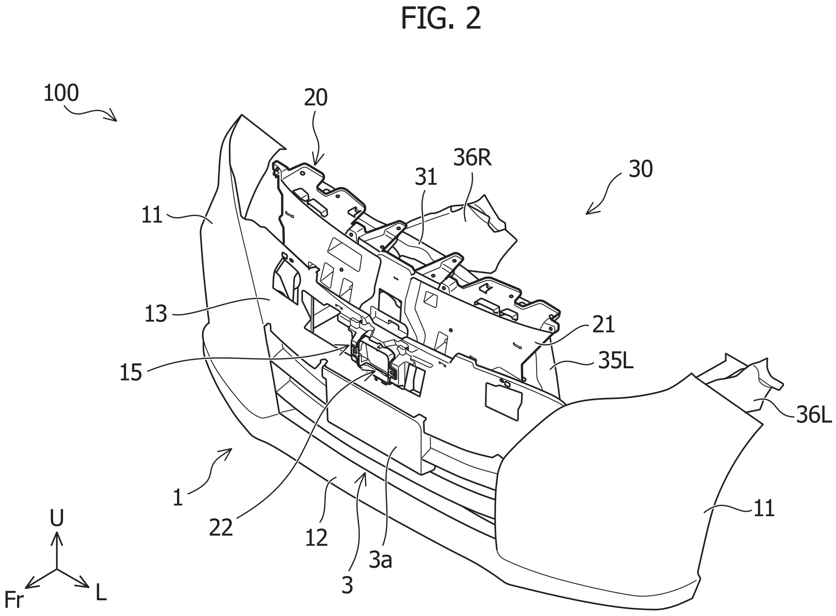

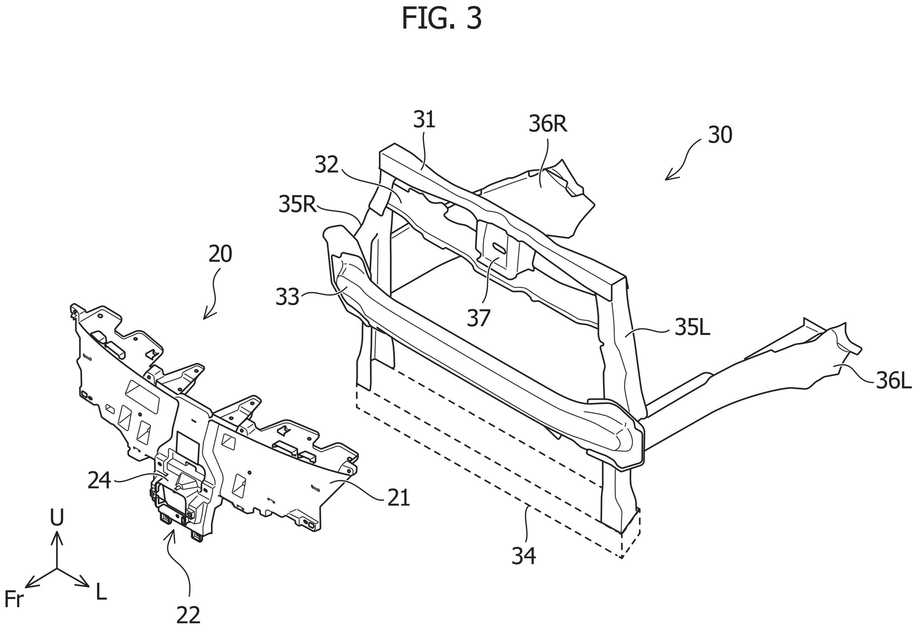

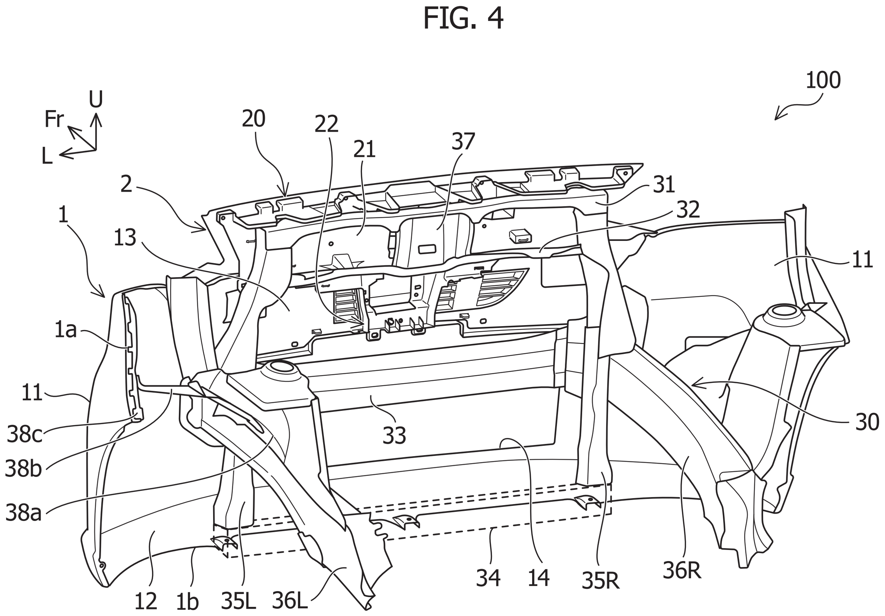

A vehicle structure 100 according to the present embodiment is applied to a front portion of a vehicle such as an automobile. As illustrated in Figures 1 to 4, an exterior panel 10, a sensor supporting member 20, and a vehicle body structural member 30 are provided at the front portion of the vehicle. Figure 1 is a perspective view of the front portion of the vehicle when viewed from the vehicle front side. Figure 2 is a perspective view of the front portion of the vehicle from which a second exterior panel 2 (to be described later) is removed when viewed from the vehicle front side. Figure 3 is an exploded perspective view of the sensor supporting member 20 and the vehicle body structural member 30 when viewed from the vehicle front side. Figure 4 is a perspective view of the front portion of the vehicle from which a third exterior panel 3 (to be described later) is removed when viewed from the vehicle rear side.

As illustrated in Figure 1, the exterior panel 10 is a bumper panel that constitutes a design surface on the vehicle outer side at the front portion of the vehicle, and extends in the vehicle up-down direction and the vehicle width direction. The exterior panel 10 includes a first exterior panel 1, a second exterior panel 2, and a third exterior panel 3. The three exterior panels 1, 2, and 3 are coupled (fixed) to one another at a plurality of coupling points including coupling points P1, P5, and P6, to be described later. The first exterior panel 1 is also called a side panel and mainly constitutes design surfaces at both side portions in the vehicle width direction in the design surface at the front portion of the vehicle. The second exterior panel 2 is also called an upper panel and constitutes a design surface at an upper portion of a central portion in the vehicle width direction in the design surface at the front portion of the vehicle. A bumper opening 14 (see Figure 4) is largely open below the second exterior panel 2. The third exterior panel 3 is a resin grille that covers the bumper opening 14 and has a plurality of ventilation holes penetrating the third exterior panel 3 in the vehicle front-rear direction. The third exterior panel 3 constitutes a design surface at a lower portion of the central portion in the vehicle width direction in the design surface at the front portion of the vehicle.

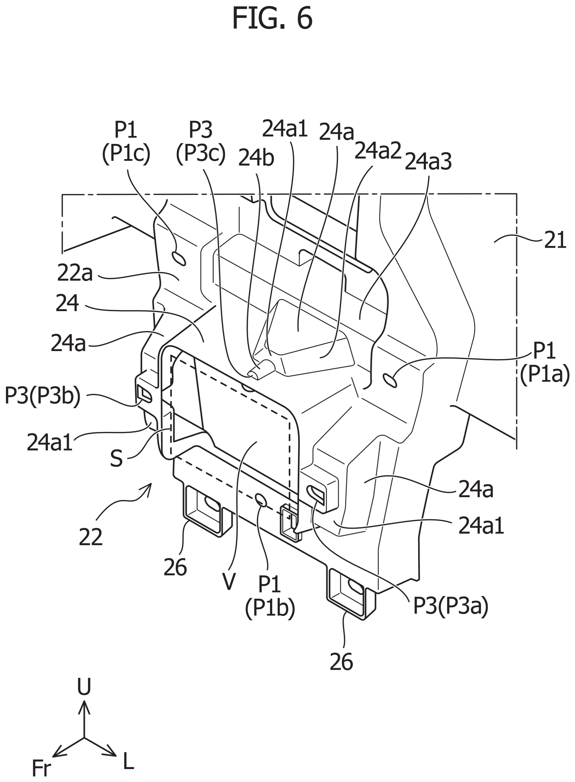

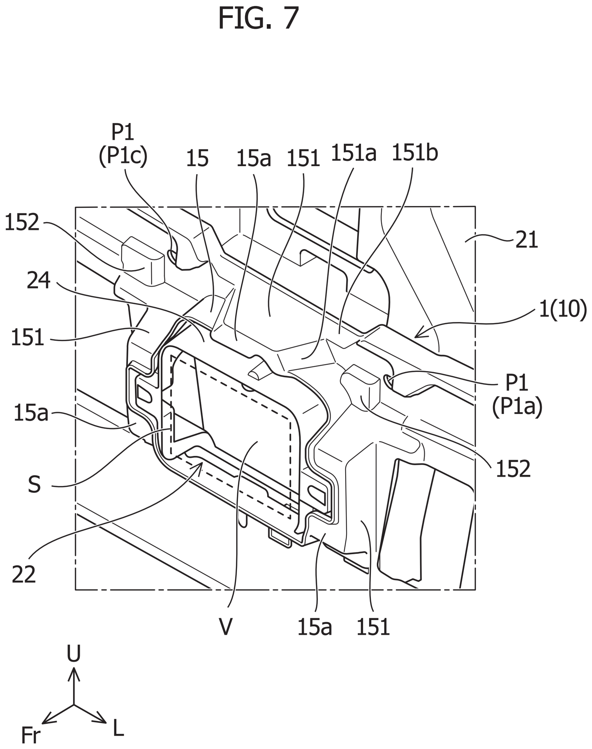

The sensor supporting member 20 is a member for disposing a sensor device S (refer to Figures 6 and 7), which senses an environment outside the vehicle, at a predetermined position on the vehicle inner side of the exterior panel 10. The predetermined position is an intended position relative to the vehicle body structural member 30 (vehicle body). The sensor device S is, for example, a millimeter wave radar that uses electromagnetic waves in a millimeter wave band as detection waves. The sensor device S transmits (emits) and receives (detects) detection waves. The second exterior panel 2 is provided with a detection wave transmission region 2a through which detection waves are transmittable. The sensor device S may be a sound wave sensor (ultrasonic wave sensor or sonar) that uses sound waves as detection waves, a camera (image capturing device) that uses electromagnetic waves in a visible light band or an infrared band as detection waves, or the like, and in such a case, the detection wave transmission region 2a may have a through hole (opening). Detection waves may be sunlight or be transmitted from a detection wave transmission device provided separately from the sensor device S, and in such a case, the sensor device S may not emit detection waves.

The vehicle body structural member 30 is a highly rigid member that is made of a steel plate or the like, constitutes a framework of the vehicle, and is disposed on the vehicle-inner side relative to the exterior panel 10. The exterior panel 10 and the sensor supporting member 20 are fixed to and are supported by the vehicle body structural member 30. As illustrated in Figure 3, in the present embodiment, the vehicle body structural member 30 includes a first cross member 31, a second cross member 32, a third cross member 33, a fourth cross member 34, a pair of left and right pillar members 35L and 35R, and a pair of left and right side members 36L and 36R. The first, second, third, and fourth cross members 31, 32, 33, and 34 extend in the vehicle width direction and are disposed with a spacing therebetween in the up-down direction. The left and right pillar members 35L and 35R extends in the up-down direction and are disposed with a spacing therebetween in the vehicle width direction. Respective end portions of each of the first, second, third, and fourth cross members 31, 32, 33, and 34 in the vehicle width direction are joined to the left and right pillar members 35L and 35R. The first cross member 31 is disposed between upper ends of the left and right pillar members 35L and 35R. The first cross member 31 is also called a hood lock member in a case in which a hood lock mechanism that locks opening and closing of a hood panel (not shown) is provided. The second cross member 32 is disposed below the first cross member 31. A central portion of the first cross member 31 in the vehicle width direction and a central portion of the second cross member 32 in the vehicle width direction are coupled by a coupling bracket 37. The third cross member 33 is disposed below the second cross member 32 and also called a bumper beam. The fourth cross member 34 is disposed between lower ends of the left and right pillar members 35L and 35R and also called a lower cross member. The left and right side members 36L and 36R extend in the front-rear direction and are disposed with a spacing therebetween in the vehicle width direction. Front end portions of the left and right side members 36L and 36R are joined to the left and right pillar members 35L and 35R, respectively.

As illustrated in Figures 1 to 4, the vehicle structure 100 according to the present embodiment includes the exterior panel 10 (specifically, the first exterior panel 1) and the sensor supporting member 20. The first exterior panel 1 is a member that constitutes a design surface on the vehicle outer side at a front or rear portion of the vehicle, and in the present embodiment, constitutes the design surface at the front portion of the vehicle as described above. Note that the front portion of the vehicle includes not only a portion facing the vehicle front side but also portions facing forward and obliquely to sides, such as left and right side portions 11 and 11 (to be described later) of the first exterior panel 1.

In the present embodiment, the first exterior panel 1 as the side panel includes the pair of side portions 11 and 11 disposed with a spacing therebetween in the vehicle width direction, a lower portion 12 that constitutes a lower end portion of the first exterior panel 1, and an attachment portion 13 that is provided between the pair of side portions 11 and 11 and to which the second exterior panel 2 is attached. Front surfaces of the pair of side portions 11 and 11 and a front surface of the lower portion 12 are design surfaces. The side portions 11 and 11 extend and tilt toward the vehicle rear side as the position moves toward the outer side in the vehicle width direction. The lower portion 12 is connected to lower ends of the side portions 11 and 11 and extends in the vehicle width direction between a left end of the left side portion 11 and a right end of the right side portion 11. The attachment portion 13 extends in the vehicle width direction between the pair of side portions 11 and 11 and extends in the vehicle up-down direction. The attachment portion 13 is disposed apart from the lower portion 12 on the vehicle upper side of the lower portion 12, and accordingly, the bumper opening 14 surrounded by the pair of side portions 11 and 11, the lower portion 12, and the attachment portion 13 is formed at a central portion of the first exterior panel 1 in the vehicle width direction.

The sensor supporting member 20 is disposed on the vehicle-inner side of the first exterior panel 1 and fixed to the vehicle body structural member 30 and supports the sensor device S configured to sense an environment outside the vehicle. Specifically, the sensor supporting member 20 includes a base portion 21 fixed to the vehicle body structural member 30, and a sensor surrounding region 22 to which the sensor device S is attached (fixed). The sensor supporting member 20 is, for example, an injection-molded resin product, and the base portion 21 and the sensor surrounding region 22 are integrally formed. A part of the sensor supporting member 20, which includes at least a frame portion 24 (to be described later) is disposed adjacent to the first exterior panel 1 on the vehicle inner side (rear side) of the first exterior panel 1.

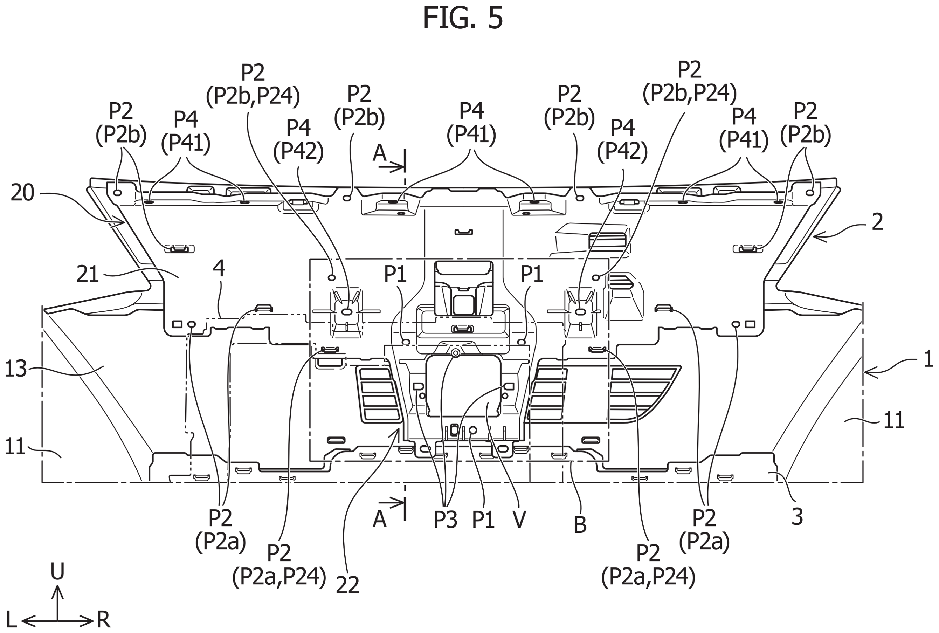

As illustrated in Figure 5, in the present embodiment, the sensor supporting member 20 is disposed substantially facing the vehicle front side and has a substantially T shape in a plan view from one side in the vehicle front-rear direction. Figure 5 is a plan view of the vehicle structure 100 when viewed from the vehicle rear side. The base portion 21 has a substantially quadrilateral shape that is elongated in the vehicle width direction in the plan view, and the sensor surrounding region 22 projects downward from a lower end of a central portion of the base portion 21 in the width direction. The base portion 21 is disposed adjacent to an upper portion of the second exterior panel 2 on the vehicle-inner side of the upper portion and covers substantially the entire upper portion of the second exterior panel 2 from the vehicle inner side (rear side). A lower end portion of the base portion 21 and the sensor surrounding region 22 is disposed on the vehicle-inner side of the first exterior panel 1.

The first cross member 31 and the second cross member 32 are disposed adjacent to the sensor supporting member 20 on the vehicle inner side (rear side) of the sensor supporting member 20 (base portion 21). The sensor supporting member 20 is fixed to the first cross member 31 and the second cross member 32 in the vehicle body structural member 30. Specifically, in a side view from one side in the width direction, the base portion 21 has a substantially inverted L-shape extending from its lower end toward the vehicle upper side and then bending to the vehicle rear side. The base portion 21 is fixed to the first cross member 31 and the second cross member 32 at vehicle body fixing points P4 (P41 and P42), to be described later, and the sensor supporting member 20 is suspended downward from the first cross member 31.

Figure 6 is a perspective view of the sensor surrounding region 22 when viewed from the vehicle front side. As illustrated in Figure 6, the sensor supporting member 20 includes the frame portion (protrusion portion) 24 protruding in the vehicle front-rear direction, which is a vehicle in-out direction, toward the vehicle front side, which is the first exterior panel 1 side (exterior panel 10 side), and supporting the sensor device S. Here, the "vehicle front side" is the vehicle outer side in the vehicle in-out direction. Note that the vehicle in-out direction is a direction connecting the vehicle inner side of the sensor supporting member 20 and the vehicle outer side of the sensor supporting member 20, in other words, a direction in which the frame portion 24 (sensor surrounding region 22) and the first exterior panel 1 face each other. In the present embodiment, the vehicle in-out direction is the vehicle front-rear direction as described above. In the present embodiment, the frame portion 24 corresponds to a "protrusion portion" according to the present invention.

In the present embodiment, the frame portion 24 is formed in a frame shape surrounding a sensor housing space V in which the sensor device S is disposed. Specifically, the sensor surrounding region 22 includes a vertical wall 22a substantially facing the vehicle front side (vehicle outer side) and extending in the up-down direction and the vehicle width direction, and the frame portion 24 protrudes from the vertical wall 22a toward the vehicle front side (vehicle outer side). Note that the vehicle outer side is a direction from the vehicle inner side of the sensor supporting member 20 toward the vehicle outer side of the sensor supporting member 20, and is the vehicle front side in the present embodiment. The frame portion 24 has a substantially annular or tubular shape at least partially surrounding the sensor housing space V and corresponding to the outer shape of the sensor device S. The frame portion 24 is open at both ends in the vehicle front-rear direction, and the sensor housing space V is open toward the vehicle front side and the vehicle rear side. In the illustrated example, the sensor device S has a substantially rectangular parallelepiped shape, and the frame portion 24 has a partially annular or partially tubular shape that is substantially C-shaped or U-shaped, lacking a lower side of a quadrilateral shape, in a plan view from one side in the vehicle front-rear direction. The sensor device S is disposed in the sensor housing space V in an orientation facing the vehicle front side (vehicle outer side) and fixed to a peripheral portion of the frame portion 24 or the frame portion 24. The frame portion 24 is disposed on the vehicle rear side of the detection wave transmission region 2a such that the sensor device S faces the detection wave transmission region 2a in the vehicle front-rear direction.

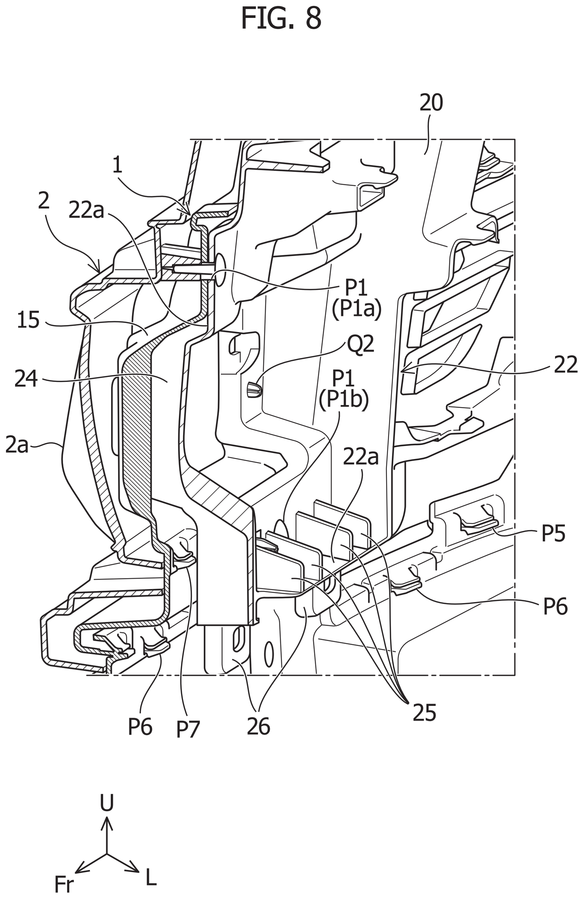

As illustrated in Figures 7 and 8, the first exterior panel 1 includes an adjoining portion 15 provided at a portion corresponding to the frame portion 24 and disposed adjacent to an outer peripheral surface of the frame portion 24. Figure 7 is a perspective view of the frame portion 24 and the adjoining portion 15 when viewed from the vehicle front side, and Figure 8 is a cross-sectional view along line A-A in Figure 5. Being disposed adjacent to the outer peripheral surface of the frame portion 24 includes being disposed in contact with the outer peripheral surface and being disposed slightly apart from the outer peripheral surface. The adjoining portion 15 has a frame shape corresponding to the outer shape of the frame portion 24, and a frame insertion hole penetrating the first exterior panel 1 in the vehicle front-rear direction (vehicle in-out direction) is formed on the inner side of the adjoining portion 15. The frame portion 24 is inserted into the frame insertion hole from the vehicle rear side, and a front end of the frame portion 24 is disposed at the same position as a front end of the adjoining portion 15 in the vehicle front-rear direction or at a position on the vehicle front side of the front end.

In the illustrated example, the adjoining portion 15 has a substantially quadrilateral annular or tubular shape closed in the circumferential direction and protrudes toward the vehicle front side from a vertical wall of the first exterior panel 1, which faces the vehicle front side (vehicle outer side) and extends in the up-down direction and the vehicle width direction. Accordingly, the adjoining portion 15 surrounds the outer peripheral surface of the frame portion 24 over the entire length in the circumferential direction and covers the outer peripheral surface of the frame portion 24 in the circumferential direction and the vehicle front-rear direction. The adjoining portion 15 is adjacent to the outer peripheral surface of the frame portion 24 on its upper, left, and right sides and adjacent to left and right lower ends of the frame portion 24 on the lower side. The sensor housing space V is surrounded by a substantially C-shaped or U-shaped inner peripheral surface of the frame portion 24 and a part of an inner peripheral surface of the adjoining portion 15.

The sensor device S needs to be maintained at an intended position relative to the vehicle body structural member 30 in order to maintain a desired sensing accuracy of the sensor device S, and thus, displacement of the sensor device S from the intended position due to vibrations of the vehicle and minor collisions needs to be reduced. Displacement of the sensor device S includes change in the position and angle of the sensor device S. In the present embodiment, the sensor device S is supported by the vehicle body structural member 30 at a position separated downward from the vehicle body structural member 30 (first cross member 31 and second cross member 32) through the sensor supporting member 20. In such a case, the length of a portion of the sensor supporting member 20 between the sensor device S and the vehicle body structural member (31 and 32) must be longer as the sensor device S is positioned farther away from the vehicle body structural member 30, and the sensor device S tends to be more susceptible to displacement such as vibrations. Thus, in a case in which the sensor device S is supported at a position separated from the vehicle body structural member 30, greater support rigidity for the sensor device S is required to reduce displacement of the sensor device S.

According to the present embodiment, the sensor supporting member 20 includes the frame portion 24 that protrudes toward the first exterior panel 1, and the first exterior panel 1 includes the adjoining portion 15 that is disposed adjacent to the outer peripheral surface of the frame portion 24. When external force or the like due to vibrations of the vehicle or minor collisions acts on the sensor supporting member 20 and the sensor device S, displacement of the frame portion 24 in directions in which the frame portion 24 and the adjoining portion 15 are adjacent to each other (vehicle width direction and the vehicle up-down direction) is reduced by the adjoining portion 15. Accordingly, even when the sensor device S is supported at a position separated from the vehicle body structural member 30 through the sensor supporting member 20, sufficient support rigidity for the sensor device S is obtained and displacement of the sensor device S from an intended position can be reduced, and as a result, degradation in sensing accuracy of the sensor device S can be reduced.

In the present embodiment, the protrusion portion is configured as the frame portion 24 open at its front and rear ends, and the sensor device S can be inserted into the frame portion 24. Thus, even when the sensor device S is disposed in the frame portion 24, the sensor device S can be easily disposed at a position closer to the vehicle outer side (vehicle front side). Accordingly, sensing accuracy of an environment outside the vehicle by the sensor device S can be increased.

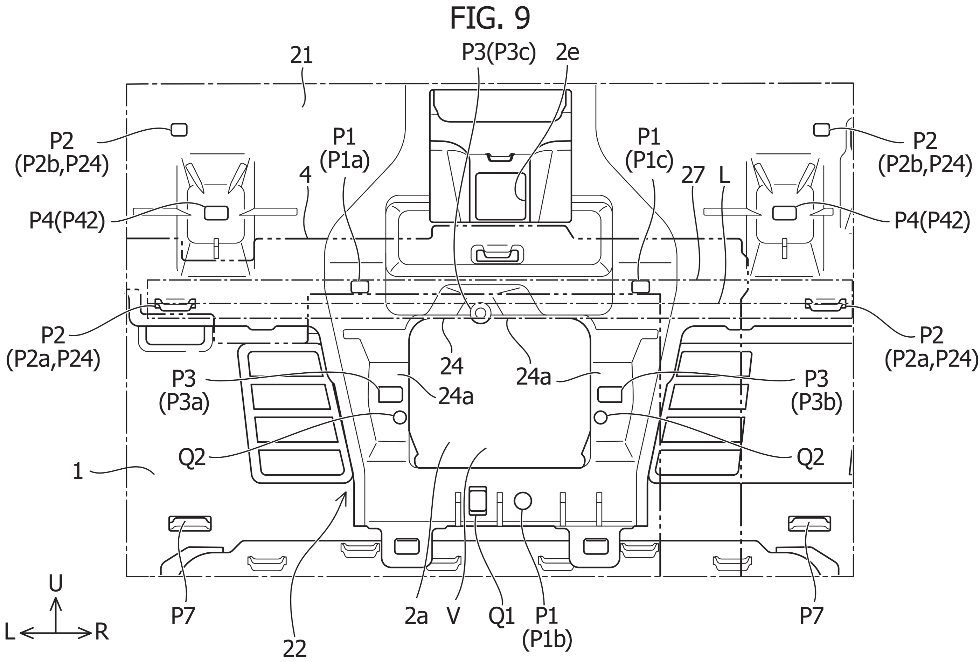

The vehicle structure 100 will be described below in further detail with reference to Figures 9 to 11.

In the present embodiment, the vehicle structure 100 further includes the second exterior panel 2 that covers a part of the first exterior panel 1 from the vehicle outer side and constitutes a design surface on the vehicle outer side. As described above, in the present embodiment, the second exterior panel 2 is an upper panel that constitutes the design surface at the upper portion of the central portion in the vehicle width direction in the design surface at the front portion of the vehicle, and includes the detection wave transmission region 2a through which detection waves to be detected (received) by the sensor device S are transmittable. The second exterior panel 2 is attached to the attachment portion 13, which is the part of the first exterior panel 1, from the vehicle front side. The frame portion 24 and the sensor device S are disposed on the vehicle-inner side of the attachment portion 13. The first exterior panel 1 may include a plurality of coupling points P7 (refer to Figures 8, 9, and 11) each coupled to the second exterior panel 2.

Specifically, a lower portion of the second exterior panel 2 is attached to the attachment portion 13. As illustrated in Figure 5, the lower end portion of the base portion 21 and the sensor surrounding region 22 in the sensor supporting member 20 are disposed on the vehicle-inner side of the attachment portion 13. The upper portion of the second exterior panel 2 is disposed on the vehicle upper side beyond an upper end of the first exterior panel 1 and covers the base portion 21 of the sensor supporting member 20 from the vehicle outer side.

The detection wave transmission region 2a is provided at the lower portion of the second exterior panel 2 and faces the sensor device S disposed in the sensor housing space V in the vehicle front-rear direction (vehicle in-out direction). In the illustrated example, the detection wave transmission region 2a is a thin plate-shaped portion substantially facing the vehicle front side and formed of a material, such as synthesis resin, which has a characteristic that detection waves are transmittable. Detection waves transmitted from the sensor device S pass (transmit) through the detection wave transmission region 2a and are emitted to the vehicle front side. When there is an obstacle on the vehicle front side, detection waves having been reflected by the obstacle and passed (transmitted) through the detection wave transmission region 2a are received and detected by the sensor device S.

With such a configuration, displacement of the sensor device S is reduced by the adjoining portion 15 as described above, and thus, change in the relative positional relationship (relative distance and relative angle) between the detection wave transmission region 2a of the second exterior panel 2 and the sensor device S is reduced and the relative positional relationship is maintained. Accordingly, degradation in the sensing accuracy of the sensor device S can be further reliably reduced. This is particularly advantageous in the case of the sensor device S, such as a millimeter wave radar that uses detection waves with high directivity, because it is necessary to maintain the relative positional relationship with high accuracy in order to maintain the sensing accuracy of the sensor device S.

As illustrated in Figure 8, the detection wave transmission region 2a preferably has a shape that is convex toward the vehicle front side. In the illustrated example, the detection wave transmission region 2a is formed in a substantially triangular shape in a side view from the vehicle one side in the width direction. With such a convex shape, the rigidity of the detection wave transmission region 2a can be increased.

As illustrated in Figure 4, in the present embodiment, at least one of side and lower end portions of the exterior panel 10 is supported by (fixed to) the vehicle body structural member 30. Specifically, at least one of a side end portion 1a and a lower end portion 1b of the first exterior panel 1 is supported by (fixed to) the vehicle body structural member 30. The side end portion 1a is each end portion of the first exterior panel 1 in the vehicle width direction. With this configuration, displacement of the first exterior panel 1 in the vehicle width direction due to vibrations and minor collisions is reduced when the side end portion 1a is supported by (fixed to) the vehicle body structural member 30. Displacement of the first exterior panel 1 in the up-down direction due to vibrations and minor collisions is reduced when the lower end portion 1b is supported by (fixed to) the vehicle body structural member 30. Accordingly, displacement of the sensor device S in the vehicle width direction and/or the up-down direction can be further reliably reduced.

Here, "being supported by the vehicle body structural member 30" includes being directly supported by (fixed to) the vehicle body structural member 30 and being indirectly supported by (fixed to) the vehicle body structural member 30 through a coupling member. The coupling member includes, for example, a lamp, a clip, or the like.

In the illustrated example, the lower end portion 1b is directly supported by (fixed to) the fourth cross member 34 that is a lower cross member. The side end portion 1a is supported by (fixed to) the front side member 36L or 36R through a side inner panel 38a, a panel support bracket 38b, and an intermediate member 38c that are parts of the vehicle body structural member 30. The side inner panel 38a extends from an upper end of the front side member 36L or 36R toward the vehicle upper side, and the panel support bracket 38b extends from the side inner panel 38a to the intermediate member (holder) 38c fixed to the side end portion 1a.

In the present embodiment, the adjoining portion 15 of the first exterior panel 1 is formed so as to surround the frame portion 24. With this configuration, the rigidity of the adjoining portion 15 increases, and the area of a part of the adjoining portion 15, which is adjacent to the outer peripheral surface of the frame portion 24 increases. Accordingly, displacement of the sensor device S can be further reliably reduced by the adjoining portion 15. In the illustrated example, as described above, the adjoining portion 15 surrounds the frame portion 24 over the entire circumference.

Here, "an adjoining portion is formed so as to surround a frame portion" includes not only the case of the adjoining portion 15 in a frame shape, in which the adjoining portion 15 surrounds the outer peripheral surface of the frame portion 24 over the entire circumference, but also the case in which the adjoining portion 15 intermittently surrounds the frame portion 24 and the case in which the adjoining portion 15 surrounds the frame portion 24 in a substantially C shape or U shape. Specifically, the adjoining portion 15 may be constituted by a plurality of wall portions arranged around the frame portion 24 with a spacing therebetween. In this case, the wall portions are preferably disposed on both sides of the frame portion 24 in at least one of the vehicle width direction and the vehicle up-down direction. Moreover, the adjoining portion 15 may have a partially annular or partially tubular shape that is substantially C-shaped or U-shaped, lacking a part of the circumferential direction, in a plan view from one side in the vehicle front-rear direction.

In the present embodiment, as illustrated in Figure 6, the frame portion 24 includes a bulging portion 24a that bulges toward an outer side (side opposite the sensor housing space V) of the frame portion 24 in a wall-thickness direction. The wall-thickness direction is the thickness direction of a substantially annular or tubular wall constituting the frame portion 24. As illustrated in Figure 7, the adjoining portion 15 includes a contact wall 15a that contacts an end face 24a1 of the bulging portion 24a in the vehicle front-rear direction (vehicle in-out direction). Specifically, the contact wall 15a is disposed at a position overlapping the bulging portion 24a in the vehicle front-rear direction. With this configuration, displacement of the frame portion 24 in the vehicle front-rear direction (vehicle in-out direction) is reduced by contact of an end face of the frame portion 24 with the contact wall 15a. Accordingly, displacement of the sensor device S in the vehicle front-rear direction (vehicle in-out direction) can be reduced.

In the illustrated example, the frame portion 24 includes the bulging portion 24a on each of its upper, left, and right sides. The upper bulging portion 24a bulges toward the vehicle upper side, and the left and right bulging portions 24a bulge toward the left and right sides, respectively. Each bulging portion 24a is formed by bulging of a part of the wall constituting the frame portion 24 toward the outer side in the wall-thickness direction. Each bulging portion 24a extends from a rear end of the frame portion 24 toward the vehicle front side and is open toward the vehicle rear side. Each bulging portion 24a is closed by a front end wall on the vehicle front side, and a front end face of each bulging portion 24a is the end face 24a1.

As illustrated in Figure 6, the upper bulging portion 24a has a trapezoidal sectional shape that increases in width toward the lower side like an upper concave portion 151, as described later, and a sidewall 24a2 of the upper bulging portion 24a is tilted so as to approach a first panel coupling point P1 (P1a), to be described later, toward the lower side. Accordingly, the rigidity of the bulging portion 24a increases. Moreover, with such a tilt of the sidewall 24a2, connection area between the sidewall 24a2 and an edge portion 24a3 that supports a rear end of the sidewall 24a2 increases and the torsional rigidity of the sidewall 24a2 and the bulging portion 24a increases.

In the illustrated example, the upper bulging portion 24a is provided with a protrusion portion 24b that protrudes from the front end face (24a1) toward the vehicle front side, and a seating surface that bolts (to be described later) at sensor fixing points P3 (to be described later) contact is formed at a distal end (front end) of the protrusion portion 24b. With such a structure, the rigidity of the seating surface increases. The edge portion 24a3 that supports a rear end of the upper bulging portion 24a has a convex shape (stepped shape) that is convex toward the vehicle front side. Accordingly, the torsional rigidity of the edge portion 24a3 and the bulging portion 24a connected thereto increases and the support rigidity for the sensor device S increases.

As illustrated in Figure 7, the adjoining portion 15 includes the concave portion 151, which includes the contact wall 15a and receives the bulging portion 24a, at a portion corresponding to each bulging portion 24a. The concave portion 151 is formed by recess of a part of a substantially annular or tubular wall forming the adjoining portion 15 toward a side opposite the frame insertion hole in a wall-thickness direction of the wall. The concave portion 151 is open toward the vehicle rear side so that the bulging portion 24a can be inserted into the concave portion 151 from the vehicle rear side. The concave portion 151 includes a front wall that is the contact wall 15a on the vehicle front side.

The upper concave portion 151 has a trapezoidal sectional shape that increases in width toward the lower side when viewed from one side in the vehicle front-rear direction. A sidewall 151a of the upper concave portion 151 is tilted so as to approach the first panel coupling point P1 toward the lower side. As described later, the first panel coupling point P1 is a point at which the sensor surrounding region 22 is coupled in an overlapping manner to both the first exterior panel 1 and the second exterior panel 2, and a peripheral portion of the first panel coupling point P1 has high rigidity. Accordingly, the rigidity of the concave portion 151 increases by the above-described tilt of the sidewall 151a. Moreover, connection area between the sidewall 151a and an edge portion 151b that supports a rear end of the sidewall 151a increases and the torsional rigidity of the sidewall 151a and the concave portion 151 increases.

As illustrated in Figure 7, the adjoining portion 15 may further include a connection portion 152 that connects the concave portion 151 and a peripheral portion of the first panel coupling point P1. The rigidity of the adjoining portion 15 increases when the connection portion 152 is provided. In the illustrated example, two connection portions 152 and 152 are provided. One of the connection portions 152 is provided on the outer side of the upper-left corner of the adjoining portion 15 and connects an upper surface of the concave portion 151 on the left side and a peripheral portion of the first panel coupling point P1 (P1a). The other connection portion 152 connects a right portion of an upper surface of the concave portion 151 on the right side and a peripheral portion of the first panel coupling point P1 (P1c).

In the present embodiment, as described above, the vehicle structure 100 further includes the second exterior panel 2 that is disposed on the vehicle outer side of a part of the first exterior panel 1 and constitutes a design surface on the vehicle outer side. At least part of the sensor supporting member 20 is coupled in an overlapping manner to both the part of the first exterior panel 1 and the second exterior panel 2. In the illustrated example, the lower end portion of the base portion 21 and the sensor surrounding region 22 in the sensor supporting member 20 are disposed in an overlapping manner in the vehicle front-rear direction with both the attachment portion 13 of the first exterior panel 1 and the lower portion of the second exterior panel 2. Thus, the lower end portion of the base portion 21 and the sensor surrounding region 22 can be coupled in an overlapping manner to both the first exterior panel 1 and the second exterior panel 2.

The rigidity of each of the exterior panels 1 and 2 is typically lower than the rigidity of the vehicle body structural member 30. Accordingly, even when the sensor supporting member 20 is fixed to each of the exterior panels 1 and 2, the support rigidity of each of the exterior panels 1 and 2 for the sensor device S is potentially insufficient. In particular, when the sensor device S is attached to a lower portion of the sensor supporting member 20 suspended downward from the first cross member 31, it is difficult to reduce swinging of the sensor device S in the vehicle front-rear direction by the rigidity of each of the exterior panels 1 and 2.

According to the present embodiment, since the sensor supporting member 20 is coupled in an overlapping manner to both the first exterior panel 1 and the second exterior panel 2, the support rigidity of the first and second exterior panels 1 and 2 for the sensor device S can be increased and displacement of the sensor device S from an intended position can be further reliably reduced. In addition, displacement of the sensor device S relative to the detection wave transmission region 2a of the second exterior panel 2 due to vibrations of the vehicle, minor collisions, or the like can be reduced to maintain the relative positional relationship (relative distance and relative angle) between the sensor device S and the detection wave transmission region 2a.

In the present embodiment, at least the sensor surrounding region 22 in the sensor supporting member 20 is preferably coupled in an overlapping manner to both a part of the first exterior panel 1 and the second exterior panel 2. As described above, the sensor surrounding region 22 is an annular region that includes the frame portion 24 and is a peripheral site of the sensor housing space V. In the illustrated example, the sensor surrounding region 22 is an annular region that is substantially rectangular in a plan view from one side in the vehicle front-rear direction. With this configuration, the support rigidity of the first and second exterior panels 1 and 2 for the sensor surrounding region 22 is high. Accordingly, displacement of the sensor device S from an intended position can be further reliably reduced and displacement of the sensor device S relative to the detection wave transmission region 2a can be further reliably reduced.

Specifically, as illustrated in Figures 5 and 9, the sensor surrounding region 22 includes a plurality of first panel coupling points P1 and a plurality of sensor fixing points P3. Figure 9 is an enlarged view of region B in Figure 5. Each first panel coupling point P1 is a coupling point of the sensor surrounding region 22 with both the first exterior panel 1 and the second exterior panel 2. In other words, the sensor surrounding region 22 is coupled (fixed) in an overlapping manner to both the first exterior panel 1 and the second exterior panel 2 at the first panel coupling points P1. Each sensor fixing point P3 is a fixing point of the sensor surrounding region 22 where the sensor device S is fixed. In other words, the sensor device S is fixed to the sensor surrounding region 22 at the sensor fixing points P3.

At each first panel coupling point P1, the sensor surrounding region 22 is coupled to the first exterior panel 1 and the second exterior panel 2 by using a coupling member such as a bolt or a clip. For example, bosses formed with screw holes are provided at positions on a rear surface of the second exterior panel 2, which correspond to the respective first panel coupling points P1, and boss holes into which the bosses are inserted from the front side are formed at positions on the first exterior panel 1, which correspond to the respective first panel coupling points P1. An insertion hole into which the bolt is inserted is formed at each first panel coupling point P1 of the sensor surrounding region 22. The bolt inserted into the insertion hole from the rear side is screwed into the screw hole of the corresponding boss, and thereby, the sensor surrounding region 22 is coupled (fixed) to both the first exterior panel 1 and the second exterior panel 2. At each sensor fixing point P3, as in the case of the first panel coupling points P1, the sensor device S is fixed to the sensor surrounding region 22 by using a coupling member such as a bolt or a clip.

As illustrated in Figure 9, the plurality of first panel coupling points P1 are arranged in the circumferential direction of the sensor surrounding region 22 around or on the frame portion 24, and the plurality of sensor fixing points P3 are each positioned between the first panel coupling points P1 in the circumferential direction. In the illustrated example, three first panel coupling points P1 (P1a, P1b, and P1c) are provided around the frame portion 24, and three sensor fixing points P3 (P3a, P3b, and P3c) are provided between the first panel coupling points P1a and P1b, between the first panel coupling points P1b and P1c, and between the first panel coupling points P1c and P1a, respectively, in the circumferential direction. The three sensor fixing points P3a, P3b, and P3c are provided on the left side, the right side, and the front end wall of the upper bulging portion 24a. A peripheral portion of each first panel coupling point P1 (P1a, P1b, or P1c) has high rigidity. Accordingly, since each sensor fixing point P3 is set between the first panel coupling points P1, the support rigidity of the sensor supporting member 20 for the sensor device S can be increased and displacement of the sensor device S can be further reliably reduced.

Each bulging portion 24a gradually narrows from the vehicle inner side (rear side) toward the front end face (24a1) on the vehicle outer side (front side) when viewed from the vehicle inner side (refer to Figure 9). This facilitates work of fixing the sensor device S to the sensor fixing point P3 from the vehicle inner side by using a coupling member such as a bolt or a clip. More specifically, the wide vehicle outer side of the bulging portion 24a facilitates work, and the narrow vehicle inner side of the bulging portion 24a helps prevent deviation in an insertion direction of the coupling member.

The plurality of first panel coupling points P1 are preferably disposed on both sides of the sensor housing space V in at least one of the vehicle width direction and the vehicle up-down direction. With this configuration, displacement of the sensor device S can be further reliably reduced. In the illustrated example, two first panel coupling points P1a and P1c are disposed on the upper side relative to the sensor housing space V, and one first panel coupling point P1b is disposed on the lower side relative to the sensor housing space V. The two upper first panel coupling points P1a and P1c are disposed on the respective sides of the sensor housing space V in the vehicle width direction, and the one lower first panel coupling point P1b is disposed at a middle in the vehicle width direction relative to the sensor housing space V.

The sensor surrounding region 22 may be provided with, near at least a portion of the plurality of first panel coupling points P1, a panel positioning portion Q1 for positioning the sensor surrounding region 22 relative to the first exterior panel 1 and the second exterior panel 2. In the illustrated example, the panel positioning portion Q1 is provided near the lower first panel coupling point P1b. The panel positioning portion Q1 has a positioning hole that penetrates in the front-rear direction. A positioning protrusion that protrudes toward the vehicle rear side and is inserted into the positioning hole is provided at a position on the second exterior panel 2, which corresponds to the positioning portion Q1, and an insertion hole into which the positioning protrusion is inserted from the front side is formed at a position on the first exterior panel 1, which corresponds to the positioning portion Q1.

Similarly, the sensor surrounding region 22 may be provided with, near at least a portion of the plurality of sensor fixing points P3, a sensor positioning portion Q2 for positioning the sensor device S relative to the sensor surrounding region 22. In the illustrated example, sensor positioning portions Q2 are provided near the left and right sensor fixing points P3a and P3b. Each sensor positioning portion Q2 includes, for example, a positioning protrusion that protrudes toward the vehicle rear side. A positioning hole into which the positioning protrusion is inserted is formed at a position on the sensor device S, which corresponds to the sensor positioning portion Q2.

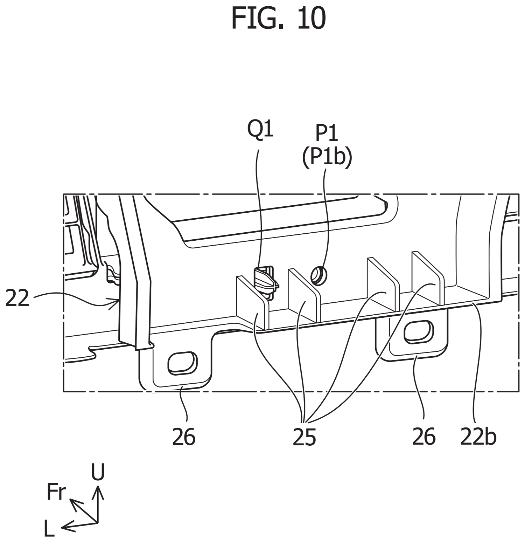

Figure 10 is a perspective view of the sensor surrounding region 22 when viewed from the rear side. As illustrated in Figure 10, the sensor surrounding region 22 is provided with a rib 25 that reinforces a peripheral portion of the first panel coupling point P1b, and two protrusion portions 26 and 26. The rib 25 is disposed on the outer side of the first panel coupling point P1b in the vehicle width direction on the rear side of the sensor surrounding region 22. In the illustrated example, two ribs 25 are provided on each of the left and right sides of the first panel coupling point P1b. Each rib 25 is a plate-shaped member extending in the up-down direction and the front-rear direction. Each rib 25 protrudes toward the vehicle rear side from a rear surface of a lower portion of the sensor surrounding region 22 and has a lower end fixed to a bottom wall 22b protruding toward the vehicle rear side from a lower end of the sensor surrounding region 22. With such a rib 25, the rigidity of the peripheral portion of the first panel coupling point P1b increases.

The protrusion portions 26 and 26 are portions that support an electric wire such as a harness connected to the sensor device S. The two protrusion portions 26 and 26 are disposed with a spacing therebetween in the vehicle width direction and each protrude downward from the lower end of the sensor surrounding region 22. The two protrusion portions 26 and 26 are provided so as to sandwich the first panel coupling point P1b and the ribs 25 in the vehicle width direction. Accordingly, the rigidity of the peripheral portion of the first panel coupling point P1b further increases.

As illustrated in Figure 5, the sensor supporting member 20 further includes a plurality of vehicle body fixing points P4 and a plurality of second panel coupling points P2. The sensor supporting member 20 is fixed to the vehicle body structural member 30 at the plurality of vehicle body fixing points P4. At each vehicle body fixing point P4, the sensor supporting member 20 is fixed to the vehicle body structural member 30 by using a coupling member such as a bolt or a clip. In the illustrated example, the base portion 21 includes the plurality of vehicle body fixing points P4. The plurality of vehicle body fixing points P4 include a plurality (in this example, six) of first vehicle body fixing points P41 for the first cross member 31 and a plurality (in this example, two) of second vehicle body fixing points P42 for the second cross member 32. The plurality of first vehicle body fixing points P41 are provided at an upper end portion of the base portion 21 protruding toward the vehicle rear side and are arranged with a spacing therebetween in the vehicle width direction. The plurality of second vehicle body fixing points P42 are disposed on both sides of the sensor surrounding region 22 in the vehicle width direction and are disposed at middle positions of the base portion 21 in the up-down direction. Each second vehicle body fixing point P42 is provided at a bottom portion of a concave portion bulging toward the vehicle rear side and is fixed to the second cross member 32 from the vehicle front side. The concave portion is provided with ribs for increasing the rigidity of the concave portion. In the illustrated example, the concave portion has a substantially quadrangular frustum shape, and five ribs radially arranged around the second vehicle body fixing point P42 are provided on a rear surface of the concave portion (refer to Figure 9).

The sensor supporting member 20 is coupled to any one of the first exterior panel 1 and the second exterior panel 2 at the plurality of second panel coupling points P2. In other words, the plurality of second panel coupling points P2 consist of second panel coupling points P2a where the sensor supporting member 20 is coupled only to the first exterior panel 1, and second panel coupling points P2b where the sensor supporting member 20 is coupled only to the second exterior panel 2. At each second panel coupling point P2, the sensor supporting member 20 is coupled to the first exterior panel 1 or the second exterior panel 2 by using a coupling member such as a bolt or a clip or by engagement between an engagement hole of the sensor supporting member 20 and an engagement claw of the first exterior panel 1 or the second exterior panel 2.

At least one of the plurality of second panel coupling points P2 is a vehicle body surrounding coupling point P24 positioned around any of the plurality of vehicle body fixing points P4. In the illustrated example, two second panel coupling points P2 (P2a and P2b) as vehicle body surrounding coupling points P24 are positioned around each of the two second vehicle body fixing points P42. The second panel coupling points P2 of the base portion 21 may be vehicle body surrounding coupling points P24 as well. A peripheral portion of each vehicle body fixing point P4 of the sensor supporting member 20 has high rigidity. Accordingly, when the second panel coupling points P2 are set around each vehicle body fixing point P4, displacement between the sensor supporting member 20 and the first exterior panel 1 or the second exterior panel 2 is more reliably reduced. Accordingly, the support rigidity of the first and second exterior panels 1 and 2 for the sensor device S can be further increased and displacement of the sensor device S from an intended position and displacement of the sensor device S relative to the detection wave transmission region 2a can be further reliably reduced.

As illustrated in Figure 9, the sensor supporting member 20 preferably includes an alignment portion 27 in which at least one first panel coupling point P1, at least one sensor fixing point P3, and at least one vehicle body surrounding coupling point P24 are arranged in one direction. In the drawing, the alignment portion 27 is illustrated with a dashed single-dotted line. In other words, in a plan view from one side in the vehicle front-rear direction, at least one first panel coupling point P1, at least one sensor fixing point P3, and at least one vehicle body surrounding coupling point P24 are arranged substantially in line along an imaginary straight line L extending in one direction. The vehicle body surrounding coupling point P24 included in the alignment portion 27 is positioned around the sensor surrounding region 22. With this configuration, the support rigidity of the first and second exterior panels 1 and 2 for the sensor device S further increases and displacement of the sensor device S can be further reliably reduced.

In the illustrated example, the alignment portion 27 is formed in which two first panel coupling points P1a and P1c, one sensor fixing point P3c, and two vehicle body surrounding coupling points P24 (second panel coupling points P2a) are arranged in the vehicle width direction. The two vehicle body surrounding coupling points P24 are two second panel coupling points P2a positioned below two second vehicle body fixing points P42 and set on both sides of the sensor surrounding region 22 in the vehicle width direction. The imaginary straight line L is a straight line passing through the two vehicle body surrounding coupling points P24. The first panel coupling points P1a and P1c and the sensor fixing point P3c are arranged between the two vehicle body surrounding coupling points P24.

As illustrated in Figures 5 and 9, the vehicle structure 100 may further include a reinforcing member 4 that reinforces the sensor supporting member 20. The reinforcing member 4 is preferably a member with higher rigidity than that of the sensor supporting member 20. In Figures 5 and 9, the reinforcing member 4 is illustrated with a dashed double-dotted line. The reinforcing member 4 is coupled to the sensor supporting member 20 from the vehicle inner side (rear side). With this configuration, the rigidity of the sensor supporting member 20 can be increased, and accordingly, the support rigidity of the sensor supporting member 20 for the sensor device S can be further increased. The reinforcing member 4 is, for example, an air guiding member such as a shroud that forms an air intake passage. Air having passed through a plurality of ventilation holes of the third exterior panel 3 as the grille is guided to a radiator, not shown, through the reinforcing member 4 as the air guiding member.

The reinforcing member 4 is preferably disposed along the alignment portion 27 and coupled to the alignment portion 27. With this configuration, the rigidity of the sensor surrounding region 22 is further increased by the reinforcing member 4 and the support rigidity of the sensor supporting member 20 for the sensor device S is further increased. As a result, displacement of the sensor device S can be further reliably reduced.

In the present embodiment, the sensor supporting member 20 includes the base portion 21 and the sensor surrounding region 22 as described above. The sensor surrounding region 22 is disposed at a position that is offset from the base portion 21 toward the vehicle front side (vehicle outer side) and in the vehicle up-down direction. As illustrated in Figure 3 and other diagrams, in the present embodiment, the sensor surrounding region 22 projects from a lower end of the base portion 21, and accordingly, is disposed at a position that is offset from the base portion 21 toward the vehicle lower side. Moreover, the sensor surrounding region 22 bulges toward the vehicle front side (vehicle outer side) relative to the base portion 21 such that the vertical wall 22a is offset from the base portion 21 toward the vehicle front side, and accordingly, the sensor surrounding region 22 is disposed at a position that is offset from the base portion 21 toward the vehicle front side.

With this configuration, the sensing accuracy of the sensor device S can be improved since the sensor surrounding region 22 is disposed farther on the vehicle outer side. Moreover, since the sensor surrounding region 22 is disposed on the lower side relative to the base portion 21, the sensor supporting member 20 deforms so that the sensor surrounding region 22 is displaced toward the vehicle inner side (vehicle rear side) when external force due to vibrations, minor collisions, or the like acts on the sensor surrounding region 22, and accordingly, impact can be absorbed.

In the illustrated example, the base portion 21 is fixed to both the first cross member 31 and the second cross member 32, but the present invention is not limited thereto and the base portion 21 may be fixed only to any one of the first cross member 31 and the second cross member 32. For example, the base portion 21 may include no second vehicle body fixing points P42 and be fixed to the first cross member 31 or the second cross member 32 at the first vehicle body fixing points P41. Moreover, in a modification of the present embodiment, the sensor surrounding region 22 may be disposed at a position that is offset from the base portion 21 toward the vehicle upper side. In other words, the sensor surrounding region 22 may project upward from an upper end of the base portion 21. In this case, the base portion 21 may be fixed to the third cross member 33.

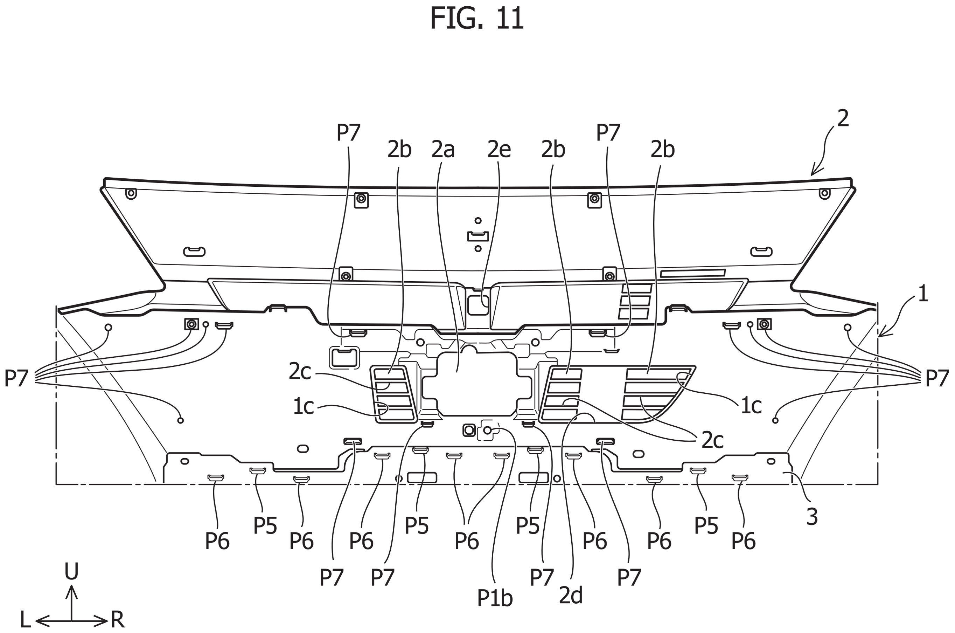

Details of the first exterior panel 1, the second exterior panel 2, and the third exterior panel 3 will be described below. Figure 11 is a plan view of the first exterior panel 1, the second exterior panel 2, and the third exterior panel 3 when viewed from the vehicle rear side. As illustrated in Figure 11, the second exterior panel 2 has opening portions 2b that penetrate the second exterior panel 2 in the vehicle front-rear direction on at least one side of the detection wave transmission region 2a in the vehicle width direction. In the illustrated example, the opening portions 2b are provided on the respective sides of the detection wave transmission region 2a in the vehicle width direction. The first exterior panel 1 has opening portions 1c in regions corresponding to the opening portions 2b. One or more ribs 2c that divide an opening portion 2b into a plurality of parts are provided on the inner side of each opening portion 2b of the second exterior panel 2. In the illustrated example, three ribs 2c extending in the vehicle width direction are arranged in each opening portion 2b with a spacing therebetween in the up-down direction. The shape of each rib 2c may be any other shape, for example, a cross shape. A camera insertion hole 2e into which a camera for capturing an image of an obstacle or the like on the vehicle front side is inserted from the vehicle rear side is provided above the detection wave transmission region 2a in the second exterior panel 2.

With such a configuration, it is possible to allow air intake through the opening portions 2b and the like while reducing decrease in the rigidity of the second exterior panel 2, which would otherwise be caused by formation of the opening portions 2b, by means of the ribs 2c. The ribs 2c are preferably provided in plurality for rigidity improvement. Moreover, a space on the vehicle inner side of the first exterior panel 1 in which the sensor device S is disposed communicates with the vehicle outer side through the opening portions 1c and the opening portions 2b. Accordingly, heat radiating performance around the sensor device S can be enhanced.

An edge portion 2d that protrudes toward the vehicle inner side (rear side) is provided at an opening edge of each opening portion 2b of the second exterior panel 2. The edge portion 2d is disposed adjacent to an opening edge of the corresponding opening portion 1c of the first exterior panel 1, and displacement of the edge portion 2d is regulated by the opening edge of the opening portion 1c. Accordingly, displacement of the detection wave transmission region 2a relative to the sensor device S can be reduced to further reliably maintain the sensing accuracy of the sensor device S.

As illustrated in Figure 11, the first exterior panel 1 includes a plurality of first grille coupling points P5 each coupled to (fixed to) the third exterior panel 3. The second exterior panel 2 includes a plurality of second grille coupling points P6 each coupled to (fixed to) the third exterior panel 3. In the illustrated example, the plurality of first grille coupling points P5 and the plurality of second grille coupling points P6 are arranged with a spacing therebetween in the vehicle width direction so as to be arranged along an upper end portion of the third exterior panel 3. At each of the grille coupling points P5 and P6, the third exterior panel 3 is coupled to the first exterior panel 1 or the second exterior panel 2 by engagement between an engagement hole of the third exterior panel 3 and an engagement claw of the first exterior panel 1 or the second exterior panel 2.

In the first exterior panel 1, each first grille coupling point P5 is disposed at the peripheral portion of the lower first panel coupling point P1b or at an edge portion of the attachment portion 13 where an insertion hole into which a bolt is inserted is formed at the first panel coupling point P1b. Accordingly, the support rigidity for the sensor device S further increases. Similarly, in the second exterior panel 2, some of the second grille coupling points P6 are disposed at the peripheral portion of the lower first panel coupling point P1b or at an edge portion where a seating surface is formed that a bolt contacts at the first panel coupling point P1b. Accordingly, the support rigidity for the sensor device S further increases.

As illustrated in Figure 1, the third exterior panel 3 includes a number plate coupling portion 3a to which a number plate (not illustrated) is attached from the vehicle outer side. The number plate coupling portion 3a is disposed adjacent to the second exterior panel 2 below the detection wave transmission region 2a. The number plate coupling portion 3a has higher rigidity than any other part of the third exterior panel 3. Some of the first grille coupling points P5 and some of the second grille coupling points P6 are disposed around the number plate coupling portion 3a. Accordingly, the support rigidity for the sensor device S further increases.

Although the embodiment of the present invention is described above, the present invention is not limited to the above-described embodiment but may include further modifications and changes based on the technical concept of the present invention. For example, the vehicle structure 100 is applied to the front portion of the vehicle in the present embodiment, but the present invention is not limited thereto and may be applied to the rear portion of the vehicle. In a case in which the vehicle structure is applied to the rear portion of the vehicle, a sensor supporting member is disposed on the vehicle inner side (vehicle front side) of a rear bumper, a rear grille, or the like that is a first exterior panel disposed at the vehicle rear portion. In this case, the "vehicle in-out direction" according to the present invention is the vehicle front-rear direction, the "vehicle outer side" according to the present invention is the vehicle rear side, and the "vehicle inner side" according to the present invention is the vehicle front side. In the present embodiment, the first exterior panel 1 is the side panel and the second exterior panel 2 is the upper panel, but an exterior panel constituting each of the first exterior panel 1 and the second exterior panel 2 is not limited thereto and may be another exterior panel such as an emblem, a grille, or a decorative member.

In the present embodiment, the vehicle structure 100 includes the second exterior panel 2, but the present invention is not limited thereto and the vehicle structure 100 may not include the second exterior panel 2. In this case, the first exterior panel 1 may be a panel serving as both the upper panel and the side panel and may include a detection wave transmission region that covers the sensor device S from the vehicle outer side at a portion facing the sensor device S in the vehicle in-out direction.

In the present embodiment, the protrusion portion is configured as the frame portion 24 in a frame shape surrounding (housing) the sensor device S, but the form of the protrusion portion is not limited thereto and may be another form. For example, the protrusion portion may be configured to support the sensor device S on the outer side of the frame portion 24, for example, when the sensor device S is attached to a front surface of the frame portion 24 from the vehicle front side such that the sensor device S is positioned on the front surface side of the protrusion portion. In this case, the protrusion portion may have a shape other than a frame shape and may be provided with, in place of the sensor housing space V, a hole through which an electric wire such as a harness penetrates, a hole through which the sensor device S is attached to the protrusion portion, or the like.

In a case in which the sensor device S is fixed on the front surface side at the protrusion portion, the rigidity of the protrusion portion may be increased, for example, by eliminating an opening at the front surface of the protrusion portion or by providing partitions that divide the sensor housing space V into a plurality of spaces, whereas the opening remains. The opening at the front surface of the protrusion portion may be reduced in size to a level that a harness of the sensor device S can be drawn out. With the size reduction of the opening, the rigidity of the protrusion portion on the front surface side increases. A front wall of the protrusion portion may be formed of a material through which detection waves are transmittable. In this case, even when a main body of the sensor device S is housed in the sensor housing space V on the inner side of the protrusion portion, the sensor housing space V can be blocked by the front wall from the vehicle front side to eliminate the opening at the front surface, thereby increasing the rigidity of the protrusion portion.

### Reference example

A reference example of the vehicle structure 100 described above will be described below. The vehicle structure of the reference example is different from the above-described vehicle structure 100 including the first exterior panel 1 and the second exterior panel 2, in that the frame portion (protrusion portion) 24 of the sensor supporting member 20 and the adjoining portion 15 of the first exterior panel 1 can be omitted.

Specifically, as illustrated in Figures 1 to 4, the vehicle structure 100 of the reference example includes the first exterior panel 1 that constitutes a design surface on the vehicle outer side at the front or rear portion of the vehicle and extends in the vehicle up-down direction, the second exterior panel 2 that covers a part of the first exterior panel 1 from the vehicle outer side and constitutes the design surface on the vehicle outer side, and the sensor supporting member 20 that is disposed on the vehicle-inner side of the first exterior panel 1 and fixed to the vehicle body structural member 30 and supports the sensor device S configured to sense an environment outside the vehicle. In the vehicle structure 100 of the reference example, at least part of the sensor supporting member 20 is coupled in an overlapping manner to both the part of the first exterior panel 1 and the second exterior panel 2.

As described above, the rigidity of each of the first exterior panel 1 and the second exterior panel 2 is typically lower than the rigidity of the vehicle body structural member 30. Accordingly, the support rigidity of each of the first exterior panel 1 and the second exterior panel 2 for the sensor device S is potentially insufficient even when the sensor supporting member 20 is fixed to each of the first exterior panel 1 and the second exterior panel 2. With the vehicle structure according to the reference example, since the sensor supporting member 20 is coupled in an overlapping manner to both the first exterior panel 1 and the second exterior panel 2, the support rigidity of the first and second exterior panels 1 and 2 for the sensor device S increases and displacement of the sensor device S from an intended position can be reduced.

The configurations of the first exterior panel 1, the second exterior panel 2, and the sensor supporting member 20 of the vehicle structure 100 described above are also applicable to the first exterior panel 1, the second exterior panel 2, and the sensor supporting member 20, respectively, of the vehicle structure according to the reference example. Specifically, as illustrated in Figures 1 and 2 and other diagrams, the second exterior panel 2 in the reference example may include the detection wave transmission region 2a through which detection waves to be detected (received) by the sensor device S are transmittable. In the reference example, as illustrated in Figure 4, at least one of the side end portion 1a and the lower end portion 1b of the first exterior panel 1 may be supported by the vehicle body structural member 30. In the reference example, as illustrated in Figures 5 to 9, the sensor supporting member 20 may include the annular sensor surrounding region 22 to which the sensor device S is attached and which is the peripheral site of the sensor housing space V, and the sensor surrounding region 22 may be coupled in an overlapping manner to both the part of the first exterior panel 1 and the second exterior panel 2.

In the reference example, as illustrated in Figures 5 to 9, the sensor surrounding region 22 may include a plurality of first panel coupling points P1 coupled to both the first exterior panel 1 and the second exterior panel 2, and a plurality of sensor fixing points P3 to which the sensor device S is fixed, the plurality of first panel coupling points P1 may be arranged in the circumferential direction of the sensor surrounding region 22, and each of the plurality of sensor fixing points P3 may be positioned between the first panel coupling points P1 in the circumferential direction.

In the reference example, as illustrated in Figures 5 to 9, the sensor supporting member 20 may include a plurality of vehicle body fixing points P4 that are fixed to the vehicle body structural member 30, and a plurality of second panel coupling points P2 that are coupled to any one of the first exterior panel 1 and the second exterior panel 2, and at least one of the plurality of second panel coupling points P2 may be a vehicle body surrounding coupling point P24 positioned around any one of the plurality of vehicle body fixing points P4. In the reference example, as illustrated in Figures 5 and 9, at least one vehicle body surrounding coupling point P24 may be positioned around the sensor surrounding region 22, and the sensor supporting member 20 may include the alignment portion 27 in which at least one first panel coupling point P1, at least one sensor fixing point P3, and at least one vehicle body surrounding coupling point P24 are arranged in one direction.

In the reference example, as illustrated in Figures 5 and 9, the reinforcing member 4 that reinforces the sensor supporting member 20 may be coupled to the sensor supporting member 20, and the reinforcing member 4 may be disposed along the alignment portion 27. In the reference example, as illustrated in Figures 6 to 8, the sensor supporting member 20 may include the frame portion (protrusion portion) 24 that protrudes toward the first exterior panel 1 in the vehicle in-out direction and surrounds the sensor housing space V in which the sensor device S is disposed, and the first exterior panel 1 may include the adjoining portion 15 that is disposed adjacent to the outer peripheral surface of the frame portion 24. In the reference example, the adjoining portion 15 may be formed so as to surround the outer peripheral surface of the frame portion 24.

In the reference example, as illustrated in Figures 6 and 7, the frame portion 24 may include the bulging portion 24a that bulges toward a side opposite the sensor housing space V in the wall-thickness direction of the frame portion 24, and the adjoining portion 15 may include the contact wall 15a that contacts an end face of the bulging portion 24a in the vehicle in-out direction. In the reference example, as illustrated in Figure 3, the sensor supporting member 20 may include the base portion 21 that is fixed to the vehicle body structural member 30, and the annular sensor surrounding region 22 to which the sensor device S is attached and which includes the frame portion 24 and is the peripheral site of the sensor housing space V, and the sensor surrounding region 22 may be disposed at a position that is offset from the base portion 21 toward the outer side of the vehicle in the up-down direction.

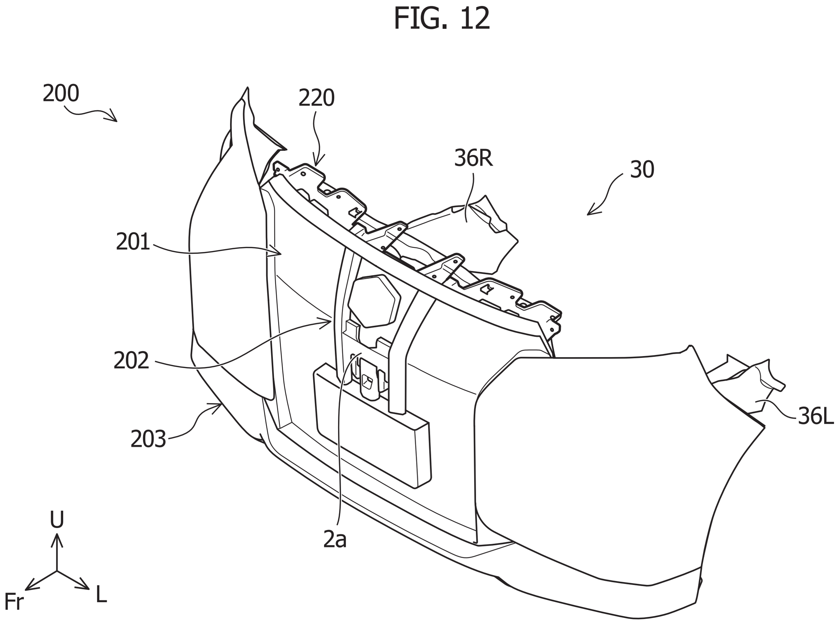

Figures 12 to 14 illustrate a vehicle structure 200 that is a modification of the vehicle structure according to the reference example. The vehicle structure 200 is different from the above-described vehicle structure 100 mainly in that a first exterior panel 201 is a grille panel having a plurality of ventilation holes, and a second exterior panel 202 is a decorative panel that is attached to a part of the first exterior panel 201 from the vehicle outer side. In this manner, the vehicle structure according to the reference example is applicable not only to the above-described exterior panel 10 but also to an exterior panel of any other configuration. The following description will be made on any component of the configuration of the vehicle structure 200, which is different from that of the vehicle structure 100, and any component identical to that of the vehicle structure 100 is denoted by the same reference sign for the vehicle structure 100 and description thereof is omitted.

As illustrated in Figure 12, the first exterior panel 201 extends in the vehicle up-down direction and the vehicle width direction and constitutes a central portion in the vehicle width direction in the design surface at the front portion of the vehicle. The first exterior panel 201 does not include the adjoining portion 15. A third exterior panel 203 that is a side panel is disposed on both sides in the vehicle width direction and the lower side of the first exterior panel 201. Side and lower end portions of the first exterior panel 201 are supported by the vehicle body structural member 30. The second exterior panel 202 includes the detection wave transmission region 2a at a substantially central portion in the vehicle width direction and the vehicle up-down direction and covers an upper portion of a central portion in the vehicle width direction in the first exterior panel 201 from the vehicle outer side.

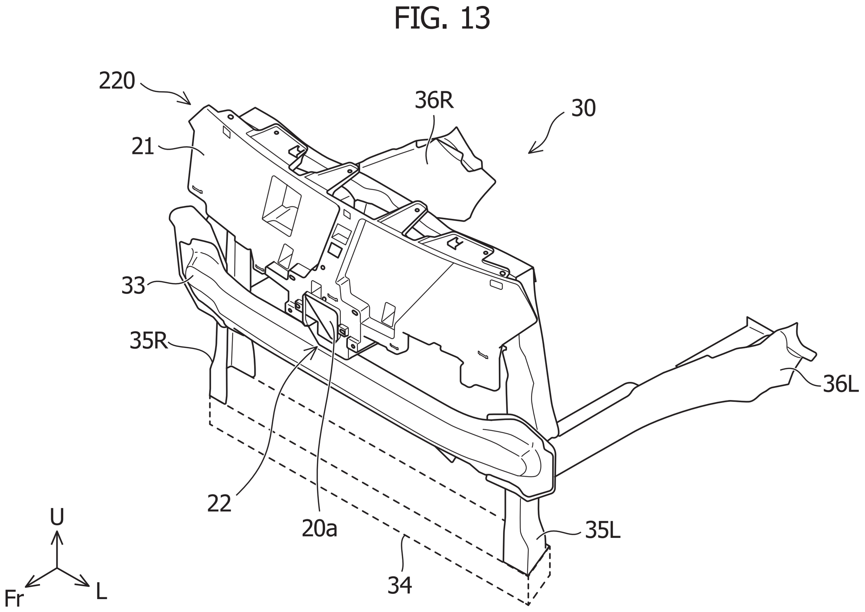

Figure 13 illustrates a sensor supporting member 220 of the vehicle structure 200. The entire sensor supporting member 220 is disposed adjacent to the first exterior panel 201 on the vehicle inner side (rear side) of the first exterior panel 201. The sensor surrounding region 22 is formed with a sensor opening 20a that penetrates the sensor supporting member 220 in the vehicle front-rear direction. The sensor device S attached to (fixed to) the sensor surrounding region 22 faces the detection wave transmission region 2a in the vehicle front-rear direction through the sensor opening 20a. A detection wave transmission region (not illustrated) through which detection waves are transmitted between the detection wave transmission region 2a and the sensor device S is provided at a part of the first exterior panel 201, which corresponds to the detection wave transmission region 2a. The detection wave transmission region is, for example, a through hole penetrating the first exterior panel 201. The sensor device S is fixed to the sensor surrounding region 22 at a plurality of sensor fixing points P3 provided at a peripheral portion of the sensor opening 20a. A part of the sensor supporting member 220 including the sensor surrounding region 22 is coupled in an overlapping manner to both a part of the first exterior panel 201 and the second exterior panel 202.

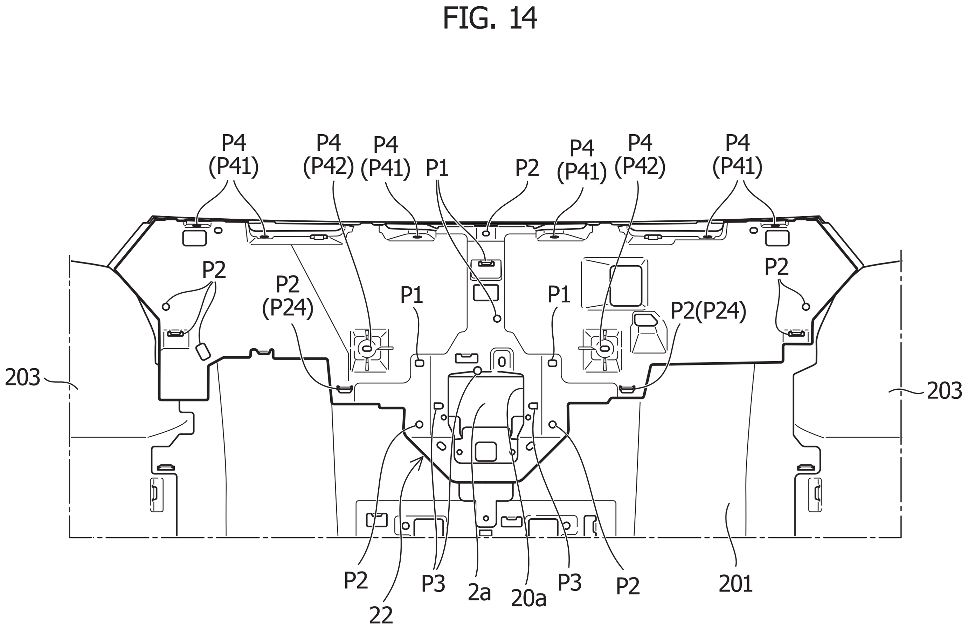

Figure 14 is a plan view of the vehicle structure 200 when viewed from the vehicle rear side. The sensor surrounding region 22 is provided with two first panel coupling points P1 arranged in the circumferential direction and three sensor fixing points P3 arranged in the circumferential direction. In addition, two first panel coupling points P1 are provided above the sensor surrounding region 22. The sensor supporting member 220 is provided with a plurality of vehicle body fixing points P4 and a plurality of second panel coupling points P2. In the present modification, all second panel coupling points P2 are second panel coupling points P2a at which the sensor supporting member 220 is coupled only to the first exterior panel 201. Second panel coupling points P2 as vehicle body surrounding coupling points P24 are disposed on both sides of the sensor surrounding region 22 in the vehicle width direction.

Specifically, the following technological matters are described in the present specification as the above-described reference example.

### [Appendix 1]

A vehicle structure including a first exterior panel that constitutes a design surface on a vehicle outer side at a front or rear portion of the vehicle and extends in a vehicle up-down direction, a second exterior panel that covers a part of the first exterior panel from the vehicle outer side and constitutes the design surface on the vehicle outer side, and a sensor supporting member that is disposed on a vehicle-inner side of the first exterior panel and fixed to a vehicle body structural member and supports a sensor device configured to sense an environment outside the vehicle, in which
at least part of the sensor supporting member is coupled in an overlapping manner to both the part of the first exterior panel and the second exterior panel.

### [Appendix 2]

The vehicle structure according to Appendix 1, in which the second exterior panel includes a detection wave transmission region through which detection waves to be detected by the sensor device are transmittable.

### [Appendix 3]

The vehicle structure according to Appendix 2, in which at least one of a side end portion and a lower end portion of the first exterior panel is supported by the vehicle body structural member.

### [Appendix 4]

The vehicle structure according to Appendix 1 or 2, in which
the sensor supporting member includes an annular sensor surrounding region to which the sensor device is attached and which is a peripheral site of the sensor housing space, and
the sensor surrounding region is coupled in an overlapping manner to both the part of the first exterior panel and the second exterior panel.

### [Appendix 5]

The vehicle structure according to Appendix 4, in which
the sensor surrounding region includes a plurality of first panel coupling points that are coupled to both the first exterior panel and the second exterior panel, and a plurality of sensor fixing points to which the sensor device is fixed, and
the plurality of first panel coupling points are arranged in a circumferential direction of the sensor surrounding region, and each of the plurality of sensor fixing points is positioned between the first panel coupling points in the circumferential direction.

### [Appendix 6]

The vehicle structure according to Appendix 1 or 2, in which
the sensor supporting member includes a plurality of vehicle body fixing points that are fixed to the vehicle body structural member, and a plurality of second panel coupling points that are coupled to any one of the first exterior panel and the second exterior panel, and
at least one of the plurality of second panel coupling points is a vehicle body surrounding coupling point positioned around any one of the plurality of vehicle body fixing points.

### [Appendix 7]

The vehicle structure according to Appendix 6, in which
at least one of the vehicle body surrounding coupling points is positioned around the sensor surrounding region, and
the sensor supporting member includes an alignment portion in which at least one of the first panel coupling points, at least one of the sensor fixing points, and the at least one vehicle body surrounding coupling point are arranged in one direction.

### [Appendix 8]

The vehicle structure according to Appendix 6, in which a reinforcing member that reinforces the sensor supporting member is coupled to the sensor supporting member, and the reinforcing member is disposed along the alignment portion.

### [Appendix 9]

The vehicle structure according to Appendix 1 or 2, in which
the sensor supporting member includes a protrusion portion that protrudes toward the first exterior panel in a vehicle in-out direction and supports the sensor device, and
the first exterior panel includes an adjoining portion that is disposed adjacent to an outer peripheral surface of the protrusion portion.

### [Appendix 10]

The vehicle structure according to Appendix 9, in which the adjoining portion is formed so as to surround the outer peripheral surface of the protrusion portion.

### [Appendix 11]

The vehicle structure according to Appendix 10, in which
the protrusion portion includes a bulging portion that bulges outward in a wall-thickness direction of the protrusion portion, and
the adjoining portion includes a contact wall that contacts an end face of the bulging portion in the vehicle in-out direction.

### [Appendix 12]

The vehicle structure according to Appendix 1 or 2, in which
the sensor supporting member includes a base portion that is fixed to the vehicle body structural member, and a sensor surrounding region to which the sensor device is attached, and
the sensor surrounding region is disposed at a position offset from the base portion toward the outer side of the vehicle and in an up-down direction.

### [Reference Signs List]

- 10: Exterior panel
- 1: First exterior panel
- 1a: Side end portion
- 1b: Lower end portion
- 1c: Opening portion
- 11: Side portion
- 12: Lower portion
- 13: Attachment portion
- 14: Bumper opening
- 15: Adjoining portion
- 15a: Contact wall
- 151: Concave portion
- 151a: Sidewall
- 151b: Edge portion
- 152: Connection portion
- 2: Second exterior panel
- 2a: Detection wave transmission region
- 2b: Opening portion
- 2c: Rib
- 2d: Edge portion
- 2e: Camera insertion hole
- 3: Third exterior panel
- 3a: Number plate coupling portion
- 20: Sensor supporting member
- 21: Base portion
- 22: Sensor surrounding region
- 22a: Vertical wall
- 22b: Bottom wall
- 24: Frame portion (protrusion portion)
- 24a: Bulging portion
- 24a1: End face
- 24a2: Sidewall
- 24a3: Edge portion
- 24b: Protrusion portion
- 25: Rib
- 26: Protrusion portion
- 27: Alignment portion
- 30: Vehicle body structural member
- 31: First cross member
- 32: Second cross member
- 33: Third cross member
- 34: Fourth cross member
- 35L, 35R: Pillar member
- 36L, 36R: Side member
- 37: Coupling bracket
- 38a: Side inner panel
- 38b: Panel support bracket
- 38c: Intermediate member
- 4: Reinforcing member
- 100: Vehicle structure
- 200: Vehicle structure
- 201: First exterior panel
- 202: Second exterior panel
- 203: Third exterior panel
- L: Imaginary straight line
- P1, P1a, P1b, P1c: First panel coupling point
- P2, P2a, P2b: Second panel coupling point
- P3, P3a, P3b, P3c: Sensor fixing point
- P4: Vehicle body fixing point
- P41: First vehicle body fixing point
- P42: Second vehicle body fixing point
- P24: Vehicle body surrounding coupling point
- P5: First grille coupling point
- P6: Second grille coupling point
- Q1: Panel positioning portion
- Q2: Sensor positioning portion
- S: Sensor device
- V: Sensor housing space

## Claims

1. A vehicle structure comprising:
an exterior panel that constitutes a design surface on a vehicle outer side; and
a sensor supporting member that is disposed on a vehicle-inner side of the exterior panel and supports a sensor device configured to sense an environment outside the vehicle,
the sensor supporting member being fixed to a vehicle body structural member, the vehicle structure being **characterized in that**
the sensor supporting member includes a protrusion portion that protrudes toward the exterior panel in a vehicle in-out direction and supports the sensor device, and
the exterior panel includes an adjoining portion that is disposed adjacent to an outer peripheral surface of the protrusion portion.

2. The vehicle structure according to claim 1, wherein
the exterior panel includes a first exterior panel including the adjoining portion, and a second exterior panel that covers a part of the first exterior panel from the vehicle outer side and constitutes the design surface on the vehicle outer side,
the protrusion portion is disposed on the vehicle-inner side of the part of the first exterior panel, and
the second exterior panel includes a detection wave transmission region through which detection waves to be detected by the sensor device are transmittable.

3. The vehicle structure according to claim 1 or 2, wherein at least one of a side end portion and a lower end portion of the exterior panel is supported by the vehicle body structural member.

4. The vehicle structure according to claim 1 or 2, wherein the adjoining portion is formed so as to surround the outer peripheral surface of the protrusion portion.

5. The vehicle structure according to claim 1 or 2, wherein
the protrusion portion includes a bulging portion that bulges outward in a wall-thickness direction of the protrusion portion, and
the adjoining portion includes a contact wall that contacts an end face of the bulging portion in the vehicle in-out direction.

6. The vehicle structure according to claim 1 or 2, wherein
the exterior panel includes a first exterior panel including the adjoining portion, and a second exterior panel that covers a part of the first exterior panel from the vehicle outer side and constitutes the design surface on the vehicle outer side, and
at least part of the sensor supporting member is coupled in an overlapping manner to both the part of the first exterior panel and the second exterior panel.

7. The vehicle structure according to claim 2, wherein
the sensor supporting member includes an annular sensor surrounding region to which the sensor device is attached and which includes the protrusion portion, and
the sensor surrounding region is coupled in an overlapping manner to both the part of the first exterior panel and the second exterior panel.

8. The vehicle structure according to claim 7, wherein
the sensor surrounding region includes a plurality of first panel coupling points that are coupled to both the first exterior panel and the second exterior panel, and a plurality of sensor fixing points to which the sensor device is fixed,
the plurality of first panel coupling points are arranged in a circumferential direction of the sensor surrounding region around or on the protrusion portion, and
each of the plurality of sensor fixing points is positioned between the first panel coupling points in the circumferential direction.

9. The vehicle structure according to claim 8, wherein
the sensor supporting member includes a plurality of vehicle body fixing points that are fixed to the vehicle body structural member, and a plurality of second panel coupling points that are coupled to any one of the first exterior panel and the second exterior panel, and
at least one of the plurality of second panel coupling points is a vehicle body surrounding coupling point positioned around any one of the plurality of vehicle body fixing points.

10. The vehicle structure according to claim 9, wherein
at least one of the vehicle body surrounding coupling points is positioned around the sensor surrounding region, and
the sensor supporting member includes an alignment portion in which at least one of the first panel coupling points, at least one of the sensor fixing points, and the at least one vehicle body surrounding coupling point are arranged in one direction.

11. The vehicle structure according to claim 10, wherein
a reinforcing member that reinforces the sensor supporting member is coupled to the sensor supporting member, and
the reinforcing member is disposed along the alignment portion.

12. The vehicle structure according to claim 1 or 2, wherein
the sensor supporting member includes
a base portion that is fixed to the vehicle body structural member, and
an annular sensor surrounding region to which the sensor device is attached and which includes the protrusion portion, and
the sensor surrounding region is disposed at a position that is offset from the base portion toward the outer side of the vehicle and in an up-down direction.
